# EUROPEAN PATENT SPECIFICATION

(11) **EP 2 619 023 B1**
(45) Date of publication and mention of the grant of the patent: **29.04.2015**
(21) Application number: 11757666.0
(22) Date of filing: 20.09.2011
(51) Int. Cl.: B60J 7/06, B60J 5/10

(54) **CONSTRUCTION FOR A SLIDING ROOF, SLIDING ROOF SYSTEM, TRUCK WITH SLIDING ROOF SYSTEM, SLIDING CANVAS TRAILER WITH A SLIDING ROOF SYSTEM, TOP COVER CONSTRUCTION**
KONSTRUKTION FÜR EIN SCHIEBEVERDECK, SCHIEBEVERDECKSYSTEM, LASTWAGEN MIT EINEM SCHIEBEVERDECKSYSTEM, PLANENAUFLIEGER MIT EINEM SCHIEBEVERDECKSYSTEM, ABDECKKONSTRUKTION
CONSTRUCTION DESTINÉE À UN TOIT COULISSANT, SYSTÈME DE TOIT COULISSANT, CAMION DOTÉ D'UN SYSTÈME DE TOIT COULISSANT, REMORQUE À TOILE COULISSANTE DOTÉE D'UN SYSTÈME DE TOIT COULISSANT, CONSTRUCTION DE COUVERCLE SUPÉRIEUR

(30) Priority: 21.09.2010 BE 201000561
(43) Date of publication of application: 31.07.2013
(73) Proprietor: European Trailer Systems GmbH, 47441 Moers (DE)
(72) Inventor: RAYEN, Luc, Theodorus, Julien, B-3580 Beringen (BE); LEURS, Joris, B-3580 Beringen (BE)
(74) Representative: Sparing, Rolf Klaus
(86) International application number: PCT/EP2011/066347
(87) International publication number: WO 2012/038440

(56) References cited:
- EP-A2- 1 136 292
- EP-A2- 2 151 370
- US-A- 2 140 960

## Description

The invention relates to a construction for a sliding roof, comprising side rails for sleepers, and bearings for the sleepers, with an end bearing and a top cover construction at the end side of the sliding roof. The invention also relates to a sliding roof system, a truck equipped with a sliding roof system and a sliding canvas trailer with a sliding roof system. The invention also relates to a top cover construction.

The sliding roof of a truck normally contains two side rails (of aluminium or steel). A number of sleepers fitted with bearings are placed on them. These sleepers (roof bars) are linked to each other through plastic foldable plates (foldable plates). A roof canvas is placed over these roof bars. There is usually a top cover at the back of the truck, which can be raised so that the linked roof bars can be moved forward and the roof opens.

The standard sliding roof is often equipped with a top cover construction which is hinged to the back of the sliding roof. This top cover construction contains a top cover that can be opened.

The truck manufacturer mounts the top cover construction, which is adjusted when the truck is fitted with, for example, a hydraulic loading bridge. The top cover of the mounted top cover construction which is fitted also serves to close the opening above the loading bridge.

These types of constructions are known, among others, from EP 1 136 292 A2, EP 2 151 370 A2 and US 2 140 960 A.

Although such a construction is useful, there are, nevertheless, a few disadvantages:
- The end bearing experiences a relatively high level of wear and does not always run equally smoothly so that a lot of force is needed to open the roof.
- The sliding section of the top cover construction is in any case partially in the cargo space, which limits the actual cargo space.
- The top cover construction limits the cargo space in the upper part, as compared to a standard sliding roof.
- Long assembly times for the clients.
- Difficult construction.

One of the aims of the invention is to provide an improved construction for a sliding roof, reducing one or more of the above problems. Another aim is to provide an improved top cover construction.

To this end, the invention provides a construction for a sliding roof according to claim 1.

For known top cover constructions, the centre of gravity of the top cover, construction is often located further from the end bearing when in the open position than when in the closed position. The consequence is that the movement of the end bearing will be tilted. The end bearing is moved backwards when opening the sliding roof. In general, a tilted end bearing moves with more difficulty, meaning that it requires more force to open the roof and it may cause additional friction and hence additional wear.

The top cover construction according to the invention allows for the centre of gravity to be located closer to the end car so that the movement of the end car can be smoother, there is less loss of space as compared to a standard sliding roof when the sliding roof is open, the internal loading height is approximately as high as in the case of a standard sliding roof system.

In addition, the system is easier to mount, easier to operate and is significantly lighter than existing systems.

The centre of gravity of the top cover construction in the open position is preferably located above the end bearing. This further diminishes wear and lowers space loss.

In the top cover construction according to the invention, the top cover construction is moved during opening to a position closer, or preferably above, the end bearing. The top cover construction is opened and moved towards the cabin.

In addition to lowering friction and easier opening and closing of the sliding roof, its advantage is that actual cargo space increases.

Further, the top cover construction contains a corner section , which corner section has a pivot on the end bearing and the construction comprises also:
- An attachment with two arms which are approximately perpendicular on each other and the end of one of the arms has a pivot which is approximately in the same position as the pivot of the corner section
- A first spring which is connected on one side close or at the end of the other arm of the attachment and on the other side with the corner section (43) close to the corner of the corner section,
- A second spring which is connected on one side with a pivot on an end bearing at a distance from the pivot of the corner section and on the other side with the corner section on or close to the corner.

The springs exercise forces on the corner section, so that the first and the second spring work together in order to open the top cover construction. This makes it possible to quickly open the top cover construction without the need of much force, with a reasonably simple construction, and without much wear or friction.

The construction is preferably so that, in fully opened position, parts of the top cover construction are located on both sides of a vertical line passing through the pivot. The weight of the parts on both sides of the vertical line through the pivot is preferably approximately equal, for example between 30-70% and 70-30%.

This leads to a balanced arrangement, and only little force is necessary in order to keep the top cover in the open position.

The springs are preferably gas springs.

The invention also allows the operation of the top cover by using a combination of retraction and compression springs.

It is preferred to make the top cover stop in various positions before it is fully opened.

These and other aspects of the invention are described below and illustrated through the drawing:
In the drawing, the figures illustrate the following:
   Figure 1 a roof construction for a sliding roof;
   Figure 2 a detail with a top cover;
   Figure 3 an open top cover for an existing construction
   Figure 4 a section of a construction according to the invention in lowered position
   Figure 5 a section of a construction according to the invention in partially open position
   Figure 6 a section of a construction according to the invention in a subsequent open position
   Figure 7 a section of a construction according to the invention in a fully opened position.
   Figures 8 to 12 further examples of a construction according to the invention.
   Figures 13 to 15 a top cover construction according to the invention.

The figures are not drawn to scale, similar parts are usually indicated with similar reference numbers.

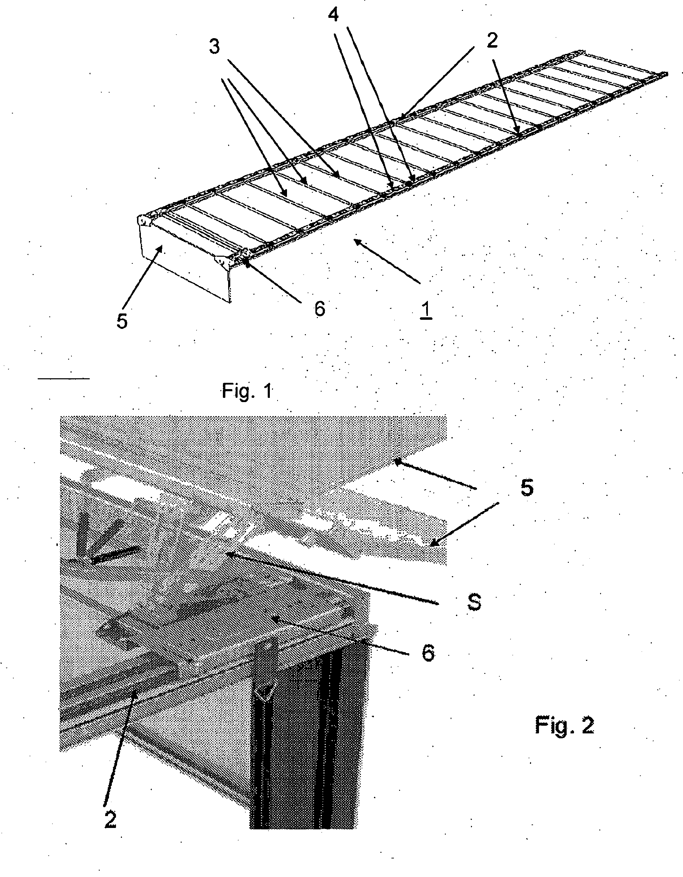

Figure 1 shows a sliding roof 1 for a truck. The sliding roof of a truck normally contains two side rails 2 (usually of aluminium or steel). A number of sleepers 3 fitted with bearings are placed on them. These sleepers (roof bars) are linked to each other through plastic foldable plates (foldable plates) 4. A roof canvas is placed over these roof bars, not shown here. There is a top cover 5 at the back of the truck, which can be raised so that the linked roof bars can move forward and the roof opens. There is an end bearing 6 in the vicinity of the top cover.

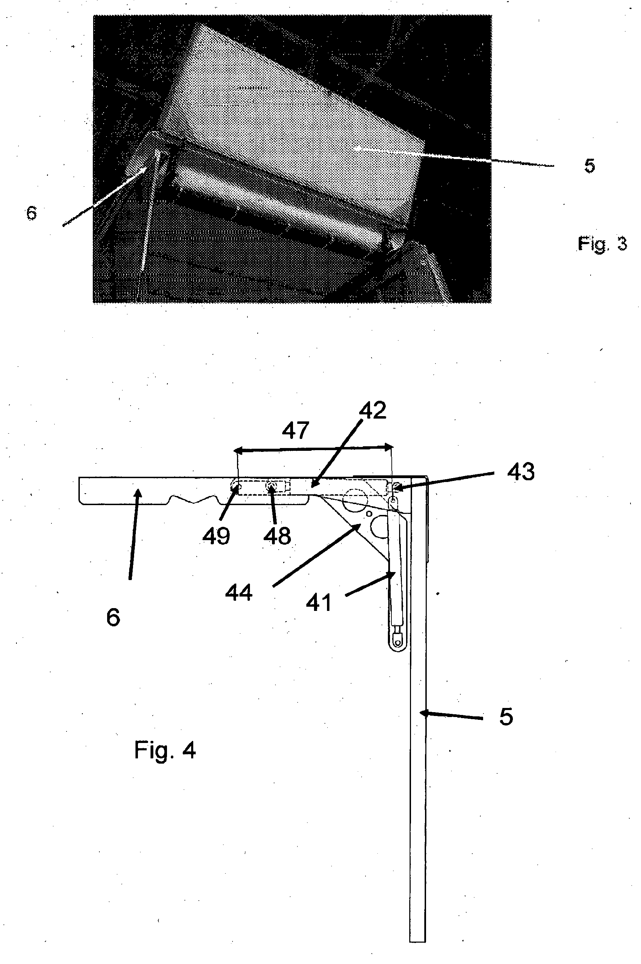

If the top cover 5 is to be opened, a lock must first be unleashed. Figure 2 shows a top view of the end bearing 6. Figures 2 and 3 show a known construction.

If the sliding roof is closed, the end bearing 6 is located at the back of the truck or trailer. The top cover is then closed, which means that the foldable system is partially in the cargo space.

In open position, the open top cover 5 protrudes a few decimetres to the back. The centre of gravity of the top cover is, as compared to the closed position, is farther from the end bearing 6. If the entire system is now pushed towards the front of the truck, the top cover exercises a torque on the end bearing 6, because the centre of gravity is located behind the end bearing 6. This causes the end bearing to run with difficulty and may cause friction and wear.

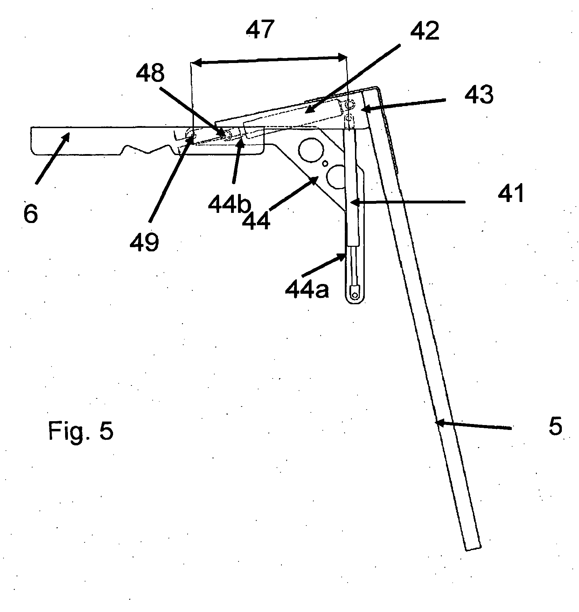

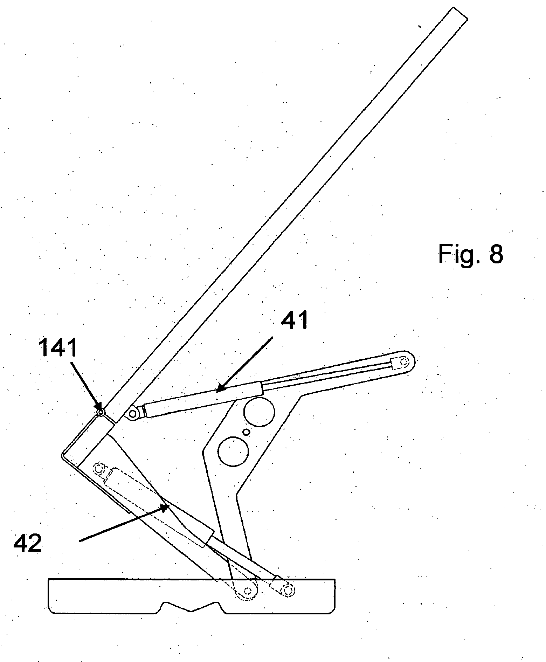

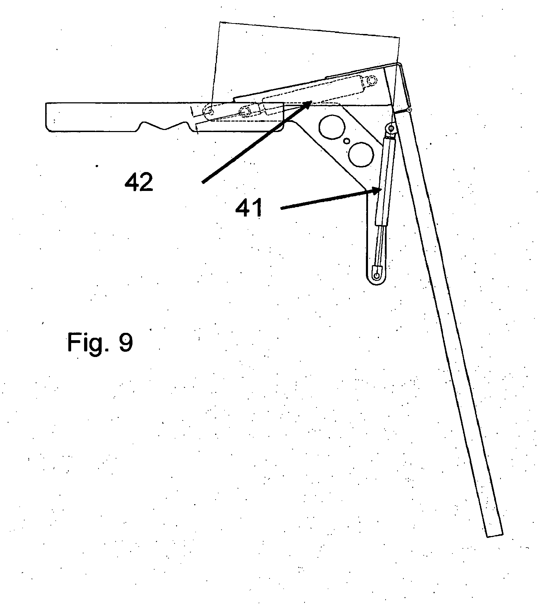

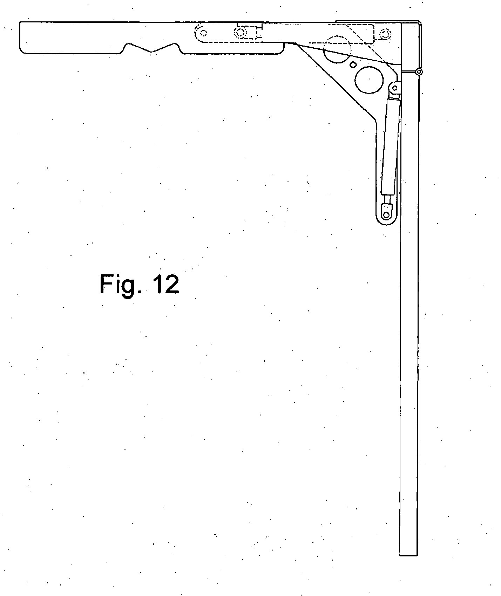

Figure 4 shows a top cover construction for a sliding roof construction according to the invention. In figures 4 to 7, the top cover is opened gradually. Figures 8 to 13 show further examples of top cover constructions according to the invention.

The embodiment shown in figure 4 comprises
- A top cover with a corner section 43, which corner section 43 has a pivot 49 on an end bearding 6,
- An attachment 44 with two arms 44a, 44b which are approximately perpendicular on each other and the end of one of the arms has a pivot which is approximately in the same position as the pivot 49 of the corner section 43,
- A first spring 41 connected on one side close or at the end of the other arm of the attachment 44 and on the other side with the corner section 43 close to the corner of the corner section,
- A second spring 42 which is connected on one side with a pivot 48 on an end bearing at a distance from the pivot 49 of the corner section 43 and on the other side with the corner section 43 on or close to the corner.

The functioning of the construction can be explained as follows:

The cover's 5 tare weight exercises a force on the pivot 49 of the system. This force develops a downward torque on the pivot. We call this the opposing torque.

The forces of the two gas springs 41, 42 exercise an upward torque force around the pivot, we call this the driving torque.

In a first phase, the top cover 5 is released. The top cover 5 remains closed because the opposing torque is higher than the driving torque.

If we operate the top cover 5 manually and move it towards the exterior, there is already a driving torque due to the action of the spring, in this example in the form of a preferred gas spring 41 and gap 47. Gas spring 42 does not yet, at this point, produce torque. The manual force is central to opening the cover.

Following a small movement to the exterior (+/-10°), an additional driving torque is created by the force of the gas spring 42 and the perpendicular gap with the gas spring 42 that exists between pivots 49 and 48. Subsequently, the opening takes place automatically and moves the cover further up with the help of the driving torque from the gas springs 41 and 42.

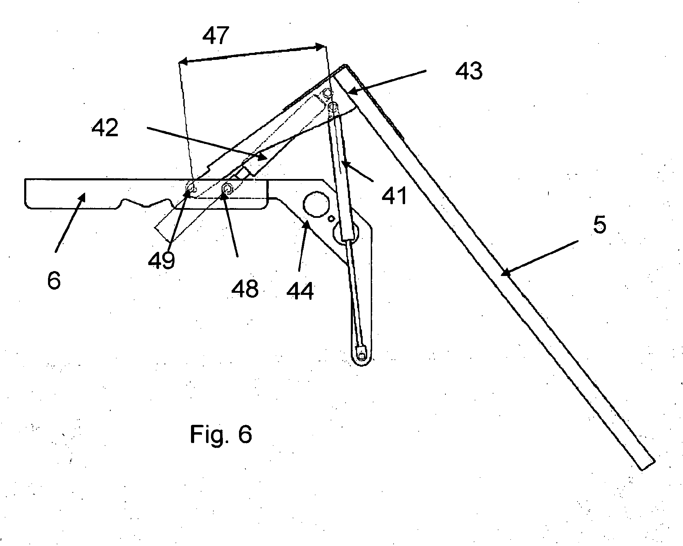

In a subsequent phase, see figure 6, at an opening angle of +/-30°, gas spring 41 is at the end of its stroke, which means that there is no driving torque from this gas spring 41 anymore. At this opening angle, the driving torque from gas spring 42 alone is higher than the opposing torque. This causes the top cover 5 to open further and the top cover 5 is taken along to its extreme position.

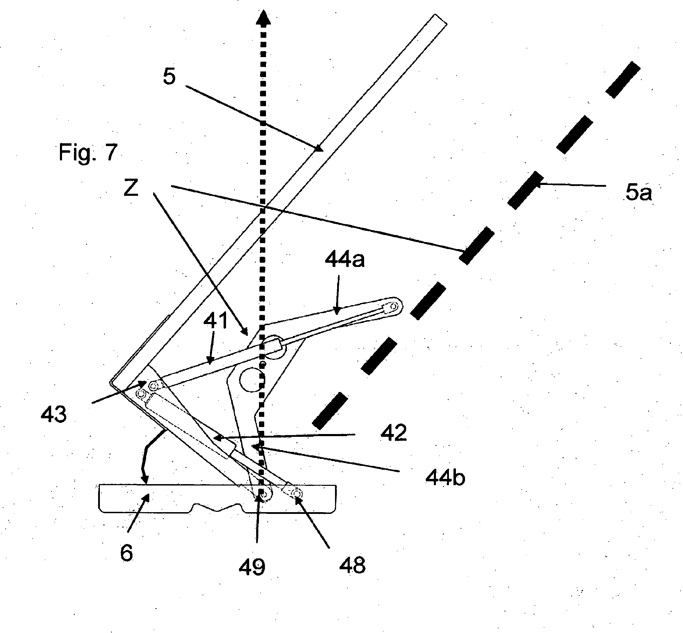

In this fully opened position, see figure 7, the entire pivot system is situated above the end bearing. As such, the sliding roof can be opened completely, without hindrance from the cargo. Due to the fact that in the top cover construction according to the invention the centre of gravity is moved towards the end bearing, unlike in the known construction, where the centre of gravity of the end bearing 6 moves away, the end bearing 6 runs more smoothly.

Figure 7 shows that, in the fully opened position, the centre of gravity Z is located above the end bearing 6. Position 5a of an open top cover in figure 3 is sketched with dotted lines. If the centre of gravity is not above end bearing 6, as in figure 3, the top cover construction exercises a force F on the end bearing 6. The resulting torque causes the end bearing to tilt, which makes it run with more difficulty and may cause friction and wear. The farther the centre of gravity Z is from the end bearing, the stronger the friction. In the known constructions, the centre of gravity Z is located during opening away from the end bearing 6 and, consequently, the torque increases. Figure 7 also shows a (dotted) vertical line through the pivot 49. As shown in figure 7, the construction is preferably so that, in fully opened position, parts of the top cover construction are located on both sides of a vertical line passing through the pivot 49. The weight of the parts on both sides of this dotted line is approximately equal, for example between 30-70% and 70-30% , or 40-60% and 60-40%, or 45-55 and 55-45%. Such weight distribution leads to a balanced arrangement with regards to the pivot, so that only a small force is necessary in order to hold the top cover construction in place in the fully opened position. In a fully balanced execution no force is necessary. It must be noted that even in a fully balanced execution wind or other causes may lead to forces being exercised nevertheless onto the top cover construction. Forces may also be exercised upon the top cover construction during the quick opening of the roof. Such additional forces may easily be absorbed by the springs if only little force is necessary in the fully opened position in order to hold the top cover construction in place.

In an arrangement where large forces must be exercised by the springs in order to keep the top cover construction in place in the fully opened position, even a powerful wind gust may exceed the spring load, or it is preferred, in order to avoid such problems, to use a relatively heavy spring.

It is also advantageous that the top cover is foreseen with a corner section 43, which preferably has a rigid structure. The L-shape of the top cover diminishes the height of the top cover during its opening. At the same time, it ensures a solid top cover. The L-shape is also very appropriate for intercepting and spreading wind.

It should be clear that many variations are possible in the framework of the invention and the invention is not limited to the examples provided above.

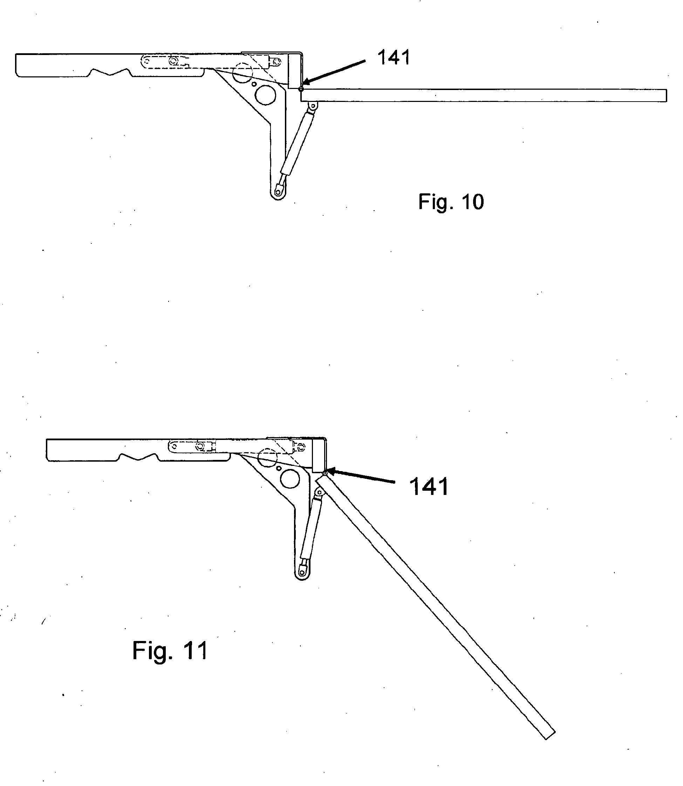

Figures 8 to 12 show a further example of a top cover construction according to the invention. In this preferred embodiment, the top cover 5 comprises a lockable pivot 141. The spring 41 is fastened right before the pivot. If the pivot is locked, the top cover construction is essentially not different from the one shown in figure 4 to 7. The position of spring 41 is, just like in figure 3, close to the corner of the top cover 5, but slightly moved. Although the fastening location of spring 41 is slightly moved, the functioning is similar to the one in figure 3. If the pivot 141 is unlocked, the spring 41 can be used, as shown in figures 10 to 12, in order to unfold only part of the top cover. This may be useful in order to be able to quickly check the cargo or in order to open only the back of the trailer, without the roof itself. In this way, several possibilities are offered, which represents the advantage of the invention. It must be noted that where reference is made to "on the end bearing," this may occur directly on or at the end bearing, or through an attachment. An attachment may be useful in order to, for example, be able to fasten a pivot to the various types of end bearings.

It must be noted that the top cover construction is a part that is usually or often is manufactured and fitted separately. The top cover constructions are located in an environment where the likelihood of damage is considerable, and hence it should be possible to manufacture them separately and deliver them as a separate (spare) part. The invention is also incorporated in such (spare or replacement) parts.

Therefore, the invention also relates to a top cover construction comprising means for moving the top cover, where the top cover contains a corner section, which corner section comprises a pivot, where the top cover construction also contains:
- An attachment with two arms which are approximately perpendicular on each other and the end of one of the arms has a pivot which is approximately in the same position as the pivot of the corner section,
- A first spring connected on one side close or at the end of the other arm of the attachment and on the other side with the corner section close to the corner of the corner section,
- A second spring connected on one side with a pivot at a distance from the pivot of the corner section and on the other side with the corner section on or close to the corner and where the distance between the pivots remains approximately the same when opening and closing the top cover.

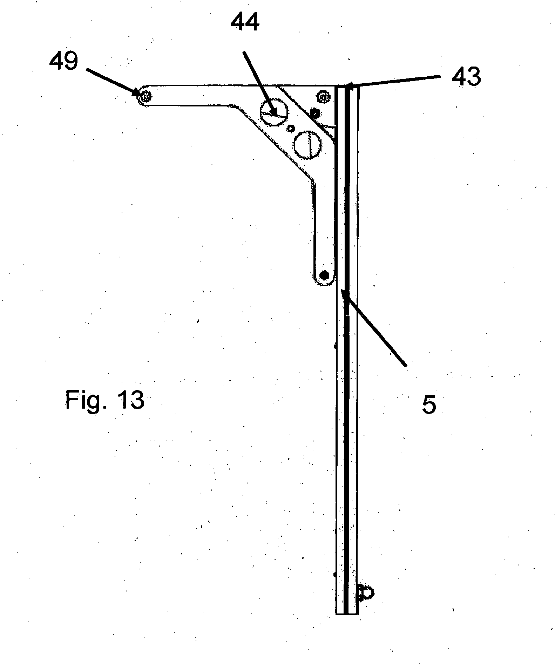

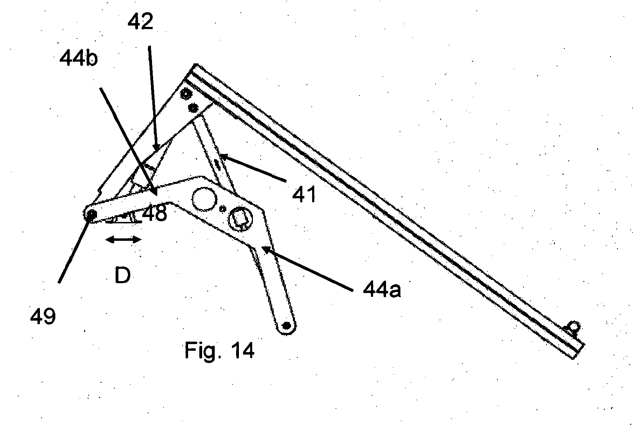

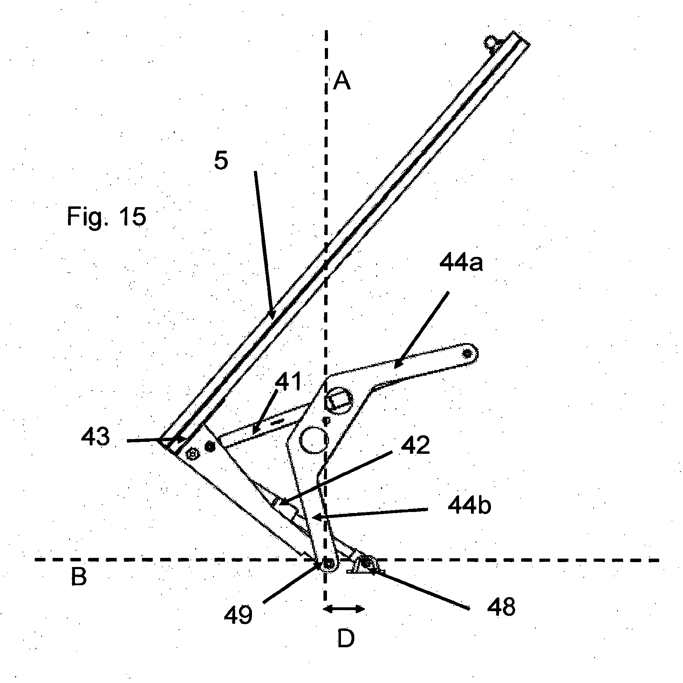

Figures 13 to 15 show such a top cover construction in closed (figure 13), half open (figure 14) and fully opened (figure 15) position, respectively. Naturally, the top cover construction according to the invention may also be executed as shown in figures 8 to 12, that is with a lockable pivot. Such top cover construction can be opened in a simple and easy way, without much force and shows little wear. The top cover construction as shown in figures 13 to 15 can also be placed on the fixed roof of a cargo space, with the advantages of its good characteristics (little force needed, simple and safe construction), but is particularly appropriate for a sliding roof. In open position, there is on both sides of a line A through pivot 49 and perpendicular on a line B through pivots 48 and 49, which line has approximately equal weight when fastened onto a roof, for example at a ratio between 30-70% and 70-30%.

## Claims

1. Top cover construction comprising
means (41, 42) for moving the top cover (5), where the top cover contains a corner section (43), which corner section (43) comprises a pivot (49),
a first spring (41), and
a second spring (42),
wherein the second spring (42) is connected on one side with a pivot (48) at a distance from the pivot (49) of the corner section (43) and on the other side with the corner section (43) on or close to the corner, wherein a distance (D) between the pivots (48, 49) remains approximately the same when opening and closing the top cover (5),
**characterized in**
**that** the top cover construction also contains an attachment (44) with two arms (44a, 44b) which are approximately perpendicular to each other, that the end of one of the arms (44b) has a pivot which is approximately in the same position as the pivot (49) of the corner section (43), and that the first spring (41) is connected on one side close or at the end of the other arm (44a) of the attachment (44) and on the other side with the corner section (43) close to the corner of the corner section (43).

2. Top cover construction according to claim 1, **characterized in that** the top cover (5) comprises a lockable pivot (141), where the first spring (41) is connected to the corner section (43) of the top cover (5) a little before the lockable pivot (141).

3. Top cover construction according to one of the previous claims, **characterized in that** in fully opened position, parts of the top cover construction are located on both sides of a vertical line passing through the pivot (49).

4. Top cover construction according to one of the previous claims, **characterized in that** the springs (41, 42) are retraction and/or compression springs.

5. Top cover construction according to one of the previous claims, **characterized in that** the top cover (5) has an L-shape with a rigid corner.

6. Top cover construction according to one of the previous claims, **characterized in that** the top cover construction has several stop positions before it is fully opened.

7. Construction for a sliding roof, comprising
side rails (2) for sleepers (3),
bearings for the sleepers (3), with an end bearing (6) and
a top cover construction according to one of the preceding claims.

8. Construction according to claim 7, **characterized in** in closed position, the centre of gravity (Z) of the top cover construction is at a certain distance from the end bearing (6), and in open position closer to the end bearing (6).

9. Construction according to claim 7 or 8, **characterized in that** the means (41, 42) for moving the top cover (5) are executed in such a way that the centre of gravity (Z) is located above the end bearing (6) in open position.

10. Construction according to claims 7 to 9, **characterized in that** the weight of the parts on both sides of the vertical line through the pivot (49) is approximately equal, for example between 30-70% and 70-30%.

11. Sliding roof system consisting of a construction according to one of the claims 7 to 10.

12. Truck equipped with a sliding roof system according to claim 11.

13. Sliding canvas trailer equipped with a sliding roof system according to claim 11.

## Patentansprüche

1. Konstruktion einer oberen Abdeckung, umfassend
Mittel (41, 42) zum Bewegen der oberen Abdeckung (5), wobei die obere Abdeckung einen Eckabschnitt (43) umfasst, wobei der Eckabschnitt (43) ein Gelenk (49) umfasst,
eine erste Feder (41), und
eine zweite Feder (42),
wobei die zweite Feder (42) einerseits beabstandet von dem Gelenk (49) des Eckabschnitts (43) mit einem Gelenk (48) und andererseits an oder nahe der Ecke mit dem Eckabschnitt (43) verbunden ist,
wobei ein Abstand (D) zwischen den Gelenken (48, 49) ungefähr gleich bleibt, wenn die obere Abdeckung (5) geöffnet und geschlossen wird, **dadurch gekennzeichnet,**
**dass** die Konstruktion einer oberen Abdeckung auch eine Anbindung (44) mit zwei Schenkeln (44a, 44b) umfasst, die ungefähr senkrecht zueinander sind,
**dass** das Ende eines der Schenkel (44b) ein Gelenk aufweist, welches ungefähr in derselben Position wie das Gelenk (49) des Eckabschnitts (43) ist, und
**dass** die erste Feder (41) einerseits nahe dem oder an dem Ende des zweiten Schenkels (44a) der Anbindung (44) und andererseits mit dem Eckabschnitt (43) nahe der Ecke des Eckabschnitts (43) verbunden ist.

2. Konstruktion einer oberen Abdeckung nach Anspruch 1, **dadurch gekennzeichnet, dass** die obere Abdeckung (5) ein verriegelbares Gelenk (141) umfasst, wobei die erste Feder mit dem Eckabschnitt (43) der oberen Abdeckung (5) ein wenig vor dem verriegelbaren Gelenk (141) verbunden ist.

3. Konstruktion einer oberen Abdeckung nach einem der vorhergehenden Ansprüche, **dadurch gekennzeichnet, dass** in der vollständig geöffneten Position Teile der Konstruktion einer oberen Abdeckung beiderseits einer vertikalen Linie, die durch das Gelenk (49) verläuft, angeordnet sind.

4. Konstruktion einer oberen Abdeckung nach einem der vorhergehenden Ansprüche, **dadurch gekennzeichnet, dass** die Federn (41, 42) Zug- und/oder Druckfedern sind.

5. Konstruktion einer oberen Abdeckung nach einem der vorhergehenden Ansprüche, **dadurch gekennzeichnet, dass** die obere Abdeckung (5) eine L-Form mit einer steifen Ecke aufweist.

6. Konstruktion einer oberen Abdeckung nach einem der vorhergehenden Ansprüche, **dadurch gekennzeichnet, dass** die obere Abdeckung mehrere Haltepositionen bis zur vollständigen Öffnung aufweist.

7. Konstruktion für ein Schiebedach, umfassend
seitliche Schienen (2) für Spriegel (3),
Lager für die Spriegel (3) mit einem Endlager (6), und
eine Konstruktion einer oberen Abdeckung nach einem der vorhergehenden Ansprüche.

8. Konstruktion nach Anspruch 7, **dadurch gekennzeichnet, dass** in der geschlossenen Position der Schwerpunkt (Z) der Konstruktion einer oberen Abdeckung wenigstens in einem bestimmten Abstand von dem Endlager (6) und in einer geöffneten Position näher an dem Endlager (6) ist.

9. Konstruktion nach Anspruch 7 oder 8, **dadurch gekennzeichnet, dass** die Mittel (41, 42) zum Bewegen der oberen Abdeckung (5) derart ausgeführt sind, dass in geöffneter Position der Schwerpunkt (Z) oberhalb des Endlagers (6) angeordnet ist.

10. Konstruktion nach einem der Ansprüche 7 bis 9, **dadurch gekennzeichnet, dass** das Gewicht der Teile beiderseits der vertikalen Linie durch das Lager (49) ungefahr gleich ist, beispielsweise zwischen 30-70 % und 70-30 %.

11. Schiebedachsystem, enthaltend eine Konstruktion nach einem der Ansprüche 7 bis 10.

12. Lastfahrzeug, ausgestattet mit einem Schiebedachsystem nach Anspruch 11.

13. Schiebeplanenanhänger, ausgestattet mit einem Schiebedachsystem nach Anspruch 11.

## Revendications

1. Construction de couvercle supérieur comprenant
des moyens (41, 42) pour déplacer le couvercle supérieur (5), où le couvercle supérieur comprend une section de coin (43), laquelle section de coin (43) comporte un pivot (49),
un premier ressort (41), et
un second ressort (42),
dans laquelle le second ressort (42) est relié d'un côté avec un pivot (48) à une distance du pivot (49) de la section de coin (43) et de l'autre côté avec la section de coin (43) sur ou à proximité du coin,
dans laquelle une distance (D) entre les pivots (48, 49) reste approximativement la même lorsque le couvercle supérieur (5) est ouvert et fermé,
**caractérisée en ce**
**que** la construction de couvercle supérieur comprend aussi une attache (44) avec deux bras (44a, 44b) qui sont approximativement perpendiculaires l'un par rapport à l'autre,
**que** l'extrémité de l'un des bras (44b) a un pivot qui est à peu près dans la même position que le pivot (49) de la section de coin (43), et
**que** le premier ressort (41) est relié d'un côté à proximité ou à l'extrémité de l'autre bras (44a) de l'attache (44) et de l'autre côté avec la section de coin (43) à proximité du coin de la section de coin (43).

2. Construction de couvercle supérieur selon la revendication 1, **caractérisée en ce que** le couvercle supérieur (5) comprend un pivot verrouillable (141), où le premier ressort (41) est relié à la section de coin (43) du couvercle supérieur (5) un peu avant le pivot verrouillable (141).

3. Construction de couvercle supérieur selon l'une des revendications précédentes, **caractérisée en ce qu'**en position complètement ouverte, des parties de la construction de couvercle supérieur sont situées sur les deux côtés d'une ligne verticale passant par le pivot (49).

4. Construction de couvercle supérieur selon l'une des revendications précédentes, **caractérisée en ce que** les ressorts (41, 42) sont des ressorts à rétraction et / ou à compression.

5. Construction de couvercle supérieur selon l'une des revendications précédentes, **caractérisée en ce que** le couvercle supérieur (5) a une forme de L avec un coin rigide.

6. Construction de couvercle supérieur selon l'une des revendications précédentes, **caractérisée en ce que** la construction de couvercle supérieur a plusieurs positions d'arrêt avant qu'elle ne soit complètement ouverte.

7. Construction pour un toit coulissant, comprenant
des rails latéraux (2) pour des traverses (3),
des paliers pour les traverses (3), avec un palier d'extrémité (6), et
une construction de couvercle supérieur selon l'une des revendications précédentes.

8. Construction selon la revendication 7, **caractérisée en ce qu'**en position fermée, le centre de gravité (Z) de la construction de couvercle supérieur se trouve à une certaine distance du palier d'extrémité (6), et en position ouverte, le centre de gravité (Z) se trouve plus proche du palier d'extrémité (6).

9. Construction selon la revendication 7 ou 8, **caractérisée en ce que** les moyens (41, 42) pour déplacer le couvercle supérieur (5) sont exécutés de telle manière qu'en position ouverte, le centre de gravité (Z) est situé au-dessus du palier d'extrémité (6).

10. Construction selon les revendications 7 à 9, **caractérisée en ce que** le poids des parties des deux côtés de la ligne verticale passant par le pivot (49) est à peu près égal, par exemple entre 30-70% et 70-30%.

11. Système de toit coulissant consistant en une construction selon l'une des revendications 7 à 10.

12. Camion doté d'un système de toit coulissant selon la revendication 11.

13. Remorque à toile coulissante dotée d'un système de toit coulissant selon la revendication 11.
